# EUROPÄISCHE PATENTSCHRIFT

(11) **EP 1 045 168 B1**
(45) Veröffentlichungstag und Bekanntmachung des Hinweises auf die Patenterteilung: **10.05.2006**
(21) Anmeldenummer: 00107820.3
(22) Anmeldetag: 12.04.2000
(51) Int. Cl.: F16H 1/14

(54) **Servoantriebssystem**
Servo drive
Servocommande

(30) Priorität: 15.04.1999 DE 19917125
(43) Veröffentlichungstag der Anmeldung: 18.10.2000
(73) Patentinhaber: GRAESSNER GmbH & Co. KG THE GEAR COMPANY, 72135 Dettenhausen (DE)
(72) Erfinder: Hoffmann, Hartmut, 71088 Holzgerlingen (DE); Böckenhoff, Bernd, 70795 Filderstadt (DE); Lossa, Wolfgang, 72108 Rothenburg (DE); Sander, Werner, 70711 Leinfelden-Echterdingen (DE)
(74) Vertreter: Rüger, Barthelt & Abel Patentanwälte

(56) Entgegenhaltungen:
- EP-A- 0 557 961
- DE-U- 7 911 366
- GB-A- 1 225 993
- NL-C- 1 005 217

## Beschreibung

In modernen Maschinen, wie sie in der Produktion, der Fertigung, bei der Verpackung von Gegenständen, der Bearbeitung von Werkstücken und Produkten und anderen Maschinen verwendet werden, sind eine Vielzahl von rotatorisch oder linear verstellbaren Achsen vorhanden. Mit Hilfe dieser Achsen werden Maschinenteile bewegt. Als einfachstes Beispiel für derartige Achsen seien die Achsen an einer Drehmaschine genannt, mit deren Hilfe der Drehmeißel relativ zu dem Werkstück verstellbar ist, oder jene Achsen, die notwendig sind, um einen automatischen Werkzeugwechsel vorzunehmen.

Von den Antriebssystemen für solche Achsen wird ein Ausgangsdrehmoment zwischen 20 Nm und ca. 1500 Nm erwartet. Trotz dieser verhältnismäßig großen Drehmomente müssen die Antriebssysteme sehr schnell reagieren können, d.h. sie müssen innerhalb sehr kurzer Zeit, was gleichbedeutend ist mit einer sehr kurzen Wegstrecke, anhalten oder auf die Höchstgeschwindigkeit beschleunigen können. Gleichzeitig muss eine vergleichsweise sehr hohe Positioniergenauigkeit erzielt werden, um die betreffenden Maschinenteile auf hundertstel von Millimetern genau anhalten zu können. Die hohen Drehmomente werden auch erforderlich, wenn es darum geht, mit Hilfe des Servoantriebs das betreffende Maschinenteil an der erreichten Position zu halten.

Es versteht sich, dass derartige Ausgangsdrehmomente bei vertretbarer Größe nur mit Hilfe verhältnismäßig schnell-laufender Motoren erreicht werden können, denen ein Getriebe nachgeschaltet ist. Die Zahnluft in dem Getriebe muss sehr klein sein, denn sonst würde selbst bei fest gebremstem Motor die Lage des betreffenden Maschinenteils entsprechend dem Zahnflankenspiel unsicher werden.

Selbst mit Stirnzahnrädern sind diese Forderungen kaum zu erreichen, wobei Stirnzahnräder den Nachteil mit sich bringen, dass die Ausgangswelle unter Umständen ungünstig ausgerichtet ist, weil sie letztlich in Verlängerung der Motorachse liegt. Die axiale Baulänge der Maschine wird hierdurch erheblich vergrößert.

Untersetzungsverhältnisse größer 10:1 führen auch bei Stirnzahnrädern bei vertretbarem Durchmesser des Ritzels zu extrem großen Zahnrädern auf der Ausgangsseite. Die Verwendung eines mehrstufigen Stirnradgetriebes stellt keinen Ausweg dar, weil das Gesamtzahnflankenspiel in jeder Stufe sich zu einem kaum vertretbarem Maß zur Ausgangsseite hin vergrößert.

Schließlich besteht ein weiteres Problem bei Stirnzahnrädern darin, dass Profilfehler und/oder Lagerungsfehler bei einer gleichförmigen Bewegung der Eingangswelle zu einer geringfügig ungleichförmigen Bewegung der Ausgangswelle führen, was wiederum in einer Positionierungsungenauigkeit resultiert. Dieses Problem wird umso gravierender, je größer das Untersetzungsverhältnis ist, weil vom Ritzel nur ein Zahn mit dem Zahnrad in Eingriff steht. Bei kleinen Untersetzungsverhältnissen ist dieser Fehler unkritisch, denn es kämmt zu jedem Zeitpunkt mehr als ein Zahn des Ritzels mit dem großen Zahnrad.

Es wurde deswegen bereits versucht, für große Untersetzungsverhältnisse ein Schneckenradgetriebe zwischen dem Antriebsmotor und der Ausgangswelle des Servoantriebs zu verwenden. Mit Schneckengetrieben lassen sich zwar verhältnismäßig große Untersetzungsverhältnisse auch einstufig realisieren, dafür haben diese Getriebe den Nachteil, dass sich ihre Zahnluft wegen des gleitenden Zahneingriffs zwischen Schnecke und Schneckenrad relativ rasch verändert. Eine ständige Nachstellung der Zahnluft ist deswegen erforderlich, wenn die gewünschte Positioniergenauigkeit nicht verloren gehen soll.

Schneckengetriebe leiden obendrein unter einem hohen Losbrechmoment. Dies führt zu einem schlechten Wirkungsgrad, wenn die Getriebe im Start-Stopp-Betrieb arbeiten müssen, wie dies bei Servoantrieben oft der Fall ist. Der Wirkungsgrad sinkt im Start-Stopp-Betrieb unter 60%.

Günstiger insofern sind Kegelräder. Aus der EP 0557 961 ist folgendes bekannt :
ein Servoantriebssystem für rotatorisch oder linear verstellbare Achsen von Maschinen, insbesondere von Fertigungsmaschinen, Produktionsmaschinen, Werkzeugmaschinen und dergl.,
mit einem Antriebsmotor, der eine Ausgangswelle aufweist,
mit einem Getriebegehäuse, in dem eine Eingangswelle sowie eine Ausgangswelle drehbar gelagert sind,
mit einem Tellerrad, das mit der Ausgangswelle drehfest verbunden ist und eine Verzahnung trägt,
mit einem Ritzel, das mit der Eingangswelle drehfest verbunden ist und eine Verzahnung trägt, wobei das Tellerrad und das Ritzel ein Hypoidgetriebe bilden, das eine Untersetzung von 10:1 aufweist.

In dem DE 79 11 366 U1 wird ein Winkelgetriebe offenbart, das sich aus zwei Kegelradgetrieben zusammensetzt.

Ausgehend hiervon ist es aufgabe der Erfindung, ein Servoantriebssystem mit einem guten Wirkungsgrad zu schaffen, das ein größeres Untersetzungsverhältnis als 10,5:1 aufweist und bei dem die Positioniergenauigkeit über einen langen Zeitraum auch ohne Nachstellen selbst bei starker dynamischer Beanspruchung erhalten bleibt.

Ferner ist es Aufgabe der Erfindung, ein Getriebe für ein derartiges Servosystem zu schaffen, das sich durch die gleichen Eigenschaften auszeichnet.

Diese Aufgabe wird erfindungsgemäß durch das Servoantriebssystem mit den Merkmalen des Anspruches 1 bzw. das Getriebe mit den Merkmalen des Anspruches 20 gelöst.

Durch die Verwendung eines Hypoidgetriebes mit Gleasonverzahnung ist es möglich, ein Winkelgetriebe zu schaffen, bei dem das Untersetzungsverhältnis größer als 10,5:1 ist. Dazu werden Verzahnugsparameter verwendet, die außerhalb dessen liegen was in den üblichen Tabellen für Gleason-Verzahnungen angegeben werden.

Außerdem hat die Gleasonverzahnung in Verbindung mit der Hypoidanordnung den Vorteil, dass die Zahnüberdeckung beim Eingriff mit dem Tellerrad größer ist. Hierdurch erhöht sich einerseits das übertragbare Drehmoment und andererseits ist bei einer gleichförmigen Bewegung am Eingang des Getriebes auch die Bewegung an dessen Ausgang ebenfalls praktisch gleichförmig. Das übertragbare Drehmoment wird im Rahmen des erforderlichen von der jeweiligen Eingriffstellung zwischen Tellerrad und Ritzel unabhängig.

Der erfindungsgemäße Servoantrieb kann als Antriebsmotor einen Elektromotor oder einen Fluidmotor aufweisen.

Die Anbringung des Getriebegehäuses des erfindungsgemäßen Antriebssystems wird besonders einfach, wenn wenigstens eine Montagefläche eine im Wesentlichen rechteckige Gestalt hat, die mit einer dazu parallelen anderen Seitenfläche über eine Seitenwandanordnung verbunden ist, die im Bereich der Ecken der Montagefläche zurückspringt. Hierdurch wird Platz geschaffen für Durchgangslöcher zur Aufnahme von Befestigungsschrauben. Die abgewinkelte Gestalt der Anordnung verringert den in Längsrichtung der Achse erforderlichen Bauraum der Maschine, die mit dem erfindungsgemäßen Antriebssystem versehen ist, erheblich, verglichen mit einer Längsanordnung.

Bei einem Winkelgetriebe mit einer derart starken Untersetzung kommt es auf eine sehr robuste Lagerung der Eingangswelle an, damit sich das Zahnflankenspiel auch unter Last nicht verändert. Bei dem erfindungsgemäßen Antriebssystem wird dies dadurch erreicht, dass das Getriebegehäuse eine zentrische Bohrung enthält, in der ein Eingangswellengehäuse steckt, das seinerseits die Lagersitze für die Wälzlager der Eingangswelle enthält. Im Getriebegehäuse kann mit sehr hoher Genauigkeit die Bohrung für das Eingangswellengehäuse hergestellt werden. Letzteres ist dagegen ein wesentlich komplizierteres Bauteil zufolge der Lagersitze für die Wälzlager, kann aber wiederum mit hoher Genauigkeit gefertigt werden, weil es im Gegensatz zu dem eigentlichen Getriebegehäuse weitgehend rotationssymmetrisch ist.

Das Ritzel und die Eingangswelle sind zweckmäßigerweise zwei Teile, die drehfest miteinander verbunden sind. Auch hierdurch vereinfacht sich die Herstellung und es erhöht sich andererseits die Präzision, weil das Ritzel, das einen kleineren Außendurchmesser als die Eingangswelle hat, ohne Behinderung durch die Eingangswelle gefertigt werden kann. Im anderen Falle würde eine vergrößerte Baulänge zustandekommen, wenn eine Kollision mit dem Werkzeug zur Herstellung der Verzahnung und dem größeren Durchmesser der Eingangswelle vermieden werden soll.

Bei dem erfindungsgemäßen Antriebssystem kommt es darauf an, das Trägheitsmoment aus der Sicht des Antriebsmotors so klein wie möglich zu halten. Es ist deswegen von Vorteil, wenn das Tellerrad mit einem zylindrischen Fortsatz versehen ist, mit dem es auf der Ausgangswelle aufgeschrumpft ist. Hierdurch lässt sich das Tellerrad ohne Behinderung durch die Ausgangswelle verzahnen, d.h. die Verzahnung ist mit geringen Toleranzen herstellbar.

Andererseits verhindert der zylindrische Fortsatz eine Verformung der Verzahnung infolge des Aufschrumpfens. Wenn gleichzeitig dieser Fortsatz auch noch dazu verwendet wird, die Ausgangswelle in dem Getriebegehäuse zu lagern, verringert sich die axiale Baulänge bzw. Dicke des Getriebegehäuses.

Praktische Erfahrungen haben gezeigt, dass bei derart hohen Untersetzungen in jedem Falle das Ritzel nicht weniger als drei Zähne haben sollte, weil sonst die Eingriffsverhältnisse zu ungünstig werden. Es sollte auch nicht mehr als sieben Zähne tragen, denn anderenfalls wird das Getriebe zu voluminös.

Der Achsversatz in dem Getriebe sollte zweckmäßigerweise 5 mm nicht unterschreiten. Der Stirnmodul bei einem Untersetzungsverhältnis von größer 10,5:1 ist abhängig von dem Ausgangsdrehmoment und liegt zweckmäßigerweise im Bereich zwischen 0,7 bis 4,0.

Ein Ritzelspiralwinkel von größer gleich 43° erweist sich hinsichtlich des Tragbildes und der Drehmomentübertragbarkeit als vorteilhaft.

Die Differenz zwischen dem Innendurchmesser der Verzahnung und dem Außendurchmesser der Verzahnung hängt wiederum vom Ausgangsdrehmoment ab und bewegt sich für einen Untersetzungsbereich zwischen 10,5:1 bis 15:1 zwischen 20 mm bei kleinen Ausgangsdrehmomenten und 100 mm bei großen Ausgangsdrehmomenten.

Das Zahnflankenspiel kann bei Getrieben mit geringem Ausgangsdrehmoment und hoher Untersetzung praktisch auf 0 verkleinert werden, während es bei großen Ausgangsdrehmomenten von ca. 1100 Nm und einem Untersetzungsverhältnis von 12:1 0,08 mm nicht übersteigen sollte.

Im Übrigen sind Weiterbildungen der Erfindung Gegenstand von Unteransprüchen.

In der Zeichnung ist ein Ausführungsbeispiel des Gegenstandes der Erfindung dargestellt. Es zeigen:
Fig. 1 ein Antriebssystem gemäß der Erfindung, in einer perspektivischen Explosionsdarstellung,
Fig. 2 das Getriebe des Antriebssystems nach Fig. 1, in einem Längsschnitt, parallel zu der Achse der Eingangswelle und
Fig. 3 das Getriebe nach Fig. 1, in einem Längsschnitt, parallel zu der Ausgangswelle.

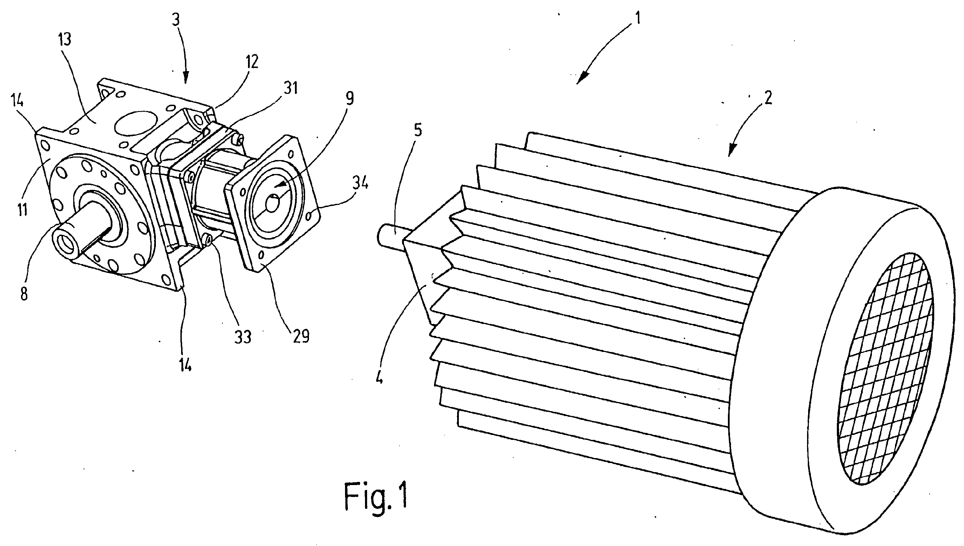

Fig. 1 zeigt in einer perspektivischen Explosionsdarstellung ein Servoantriebssystem 1, wie es zum Antreiben von linearen und rotatorischen Achsen bei Maschinen zu verwenden ist. Die Maschinen bei denen derartige Servosysteme eingesetzt werden, sind Produktionsmaschinen, Fertigungsmaschinen, Werkzeugmaschinen, Verpackungsmaschinen, Roboter, Handhabungsmaschinen u.dgl. Bei all diesen Antrieben geht es darum, dass die Achse nicht kontinuierlich ständig in Bewegung ist, wie beispielsweise die Schleifspindel bei einer Schleifmaschine, sondern diskontinuierlich im Start-Stopp-Betrieb bewegt werden soll, d.h. die Achse bewegt sich für eine vorgegebene Zeit, bis das betreffende Maschinenteil an die gewünschte Stellung gebracht ist und wird sodann stillgesetzt, um nach einer mehr oder weniger langen Wartezeit in eine neue Position zu fahren. Die Antriebe für die Achsen müssen deswegen in der Lage sein, einen derartigen diskontinuierlichen Betrieb, der große Beschleunigungs- und Verzögerungskräfte verursacht, auszuhalten, ohne dass sich im Laufe der Zeit ein Spiel einstellt, das die Positioniergenauigkeit der betreffenden Maschinenteile in nachteiliger Weise beeinträchtigt.

Das gezeigte Servoantriebssystem 1 weist als Antriebsmotor einen Wechselstrommotor 2 und ein daran angeflanschtes Winkelgetriebe 3 auf. Aus dem Antriebsmotor 2 steht eine Montagefläche 4 vor, in der eine Ausgangs- oder Motorwelle 5 des Antriebsmotors 2 drehbar gelagert ist.

Zu dem Getriebe 3 gehört ein Getriebegehäuse 6, in dem eine Eingangswelle 7 sowie eine Ausgangswelle 8 drehbar gelagert sind. Die Achsen der Eingangswelle 7 und der Ausgangswelle 8 verlaufen rechtwinklig zueinander.

Um die Eingangswelle 7 mit der Motorwelle 5 zu kuppeln, ist eine elastomere Wellenkupplungsanordnung 9 vorgesehen.

Das Getriebegehäuse 6 weist eine im Wesentliche quaderförmige Gestalt auf und wird von zwei zueinander parallelen Flachseiten 11 und 12 sowie einer Seitenwandanordnung 13 begrenzt, die sich zwischen den beiden Flachseiten 11 und 12 erstreckt. Die Flachseiten 11 und 12 sind deckungsgleich und haben eine quadratische Gestalt unter Ausbildung von insgesamt vier Ecken 14. Die Montage- oder Flachseiten 11 und 12 sowie die Seitenwandanordnung 13 sind miteinander einstückig und begrenzen einen Getrieberaum 15.

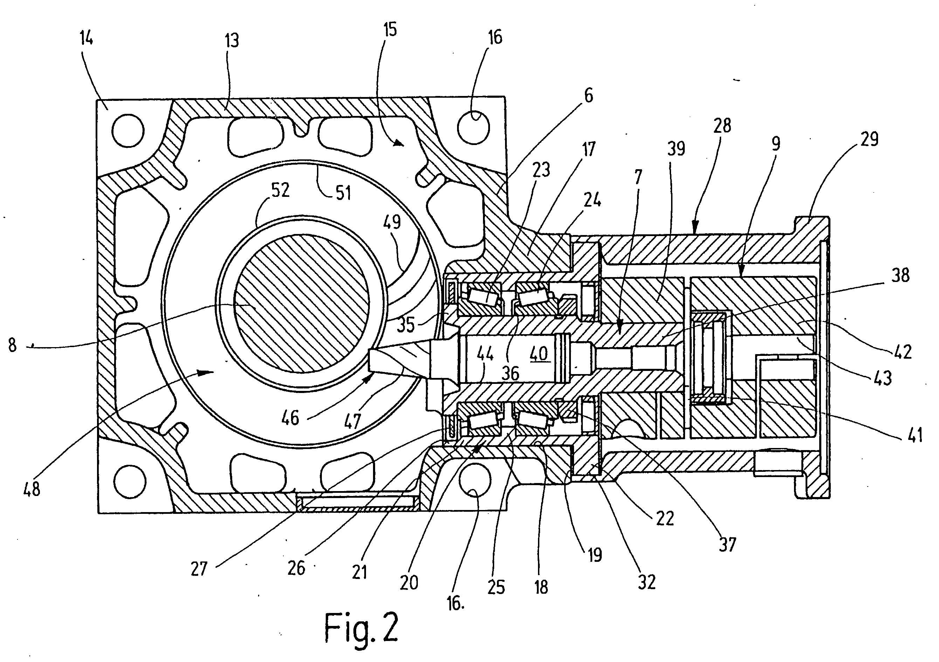

Wie insbesondere der Schnitt gemäß Fig. 2 erkennen lässt, ist die Seitenwandanordnung 13 im Bereich der Ecken 14 zurückspringend ausgebildet, so dass die Ecken 14 auf ihrer von der Montagefläche 11 bzw. 12 abliegenden Rückseite freigestellt sind. In diesem freigestellten Bereich befinden sich Durchgangsbohrungen 16 zur Aufnahme von Befestigungsschrauben, mit denen das Antriebssystem 1 an der betreffenden Maschine angeschraubt wird. Wie der Schnitt gemäß Fig. 2 ferner erkennen lässt, steht die Seitenwandanordnung 13 mit Ausnahme der Umgebung der Eingangswelle 7 an keiner Stelle über das durch die beiden Montageflächen 11 und 12 definierte Lichtraumprofil über.

Zwecks Lagerung der Eingangswelle 7 geht die Seitenwandanordnung 13 an einer von ihr definierten Seitenfläche einstückig in einen nach außen auskragenden Halsteil 17 über, der eine zylindrische Durchgangsbohrung 18 enthält und nach außen an einer planen Stirnfläche 19 endet, die die Bohrung 18 konzentrisch umgibt. Die Bohrung 18 ist eine zylindrische Durchgangsbohrung, die in den Innenraum 15 führt.

In der Bohrung 18 steckt ein Eingangswellengehäuse 20, das sich aus einem zylindrischen rohrförmigen Abschnitt 21 und einem radial nach außen ragenden Flansch 22 zusammensetzt. Der Flansch 22 liegt an der planen Stirnfläche 19 von außen auf, während der zylindrische Abschnitt 21 in der Bohrung 18 praktisch spielfrei sitzt. Im Inneren des Eingangswellengehäuses 20 befinden sich in X-Anordnung zwei Kegelrollenlager 23 und 24, die mittels einem zwischen deren Außenlagerringe ragenden Bund 25 auf Abstand gehalten sind, der einstückig mit dem zylindrischen Abschnitt 21 ist. An seinem zum Gehäuseinneren 15 gelegenen Ende ist der rohrförmige Abschnitt 21 mit einer Ausdrehung 26 versehen, die eine Lippendichtung 27 aufnimmt. Die Lippendichtung 27 dichtet das Innere des Eingangswellengehäuses gegen die Eingangswelle 7 ab.

Zur Befestigung des Eingangswellengehäuses 20 ist ein Zwischengehäuse 28 vorgesehen, das ebenfalls rohrförmig ist und an beiden axialen Enden jeweils mit einem radial nach außen ragenden Flansch 29 bzw. 31 versehen ist. In dem Flansch 31 befindet sich eine Ausdrehung 32, die den Flansch 22 übergreift und den Flansch 22 gegen die Stirnfläche 19 festspannt. Hierzu enthält der Flansch 31 mehrere Durchgangsbohrungen, durch die Schrauben 33 hindurchführen, die in entsprechende Gewindesackbohrungen des Getriebegehäuses 6 eingeschraubt sind.

Weitere Bohrungen 34 sind in dem Montageflansch 29 enthalten und dienen der Aufnahme von Befestigungsschrauben, um den Flansch 29 mit dem Befestigungsflansch 4 des Motors 2 zu verbinden.

Die Eingangswelle 7 ist ein rotationssymmetrisches Bauteil, das an seinem zum Gehäuseinneren 15 hin gelegenen Ende mit einer radial nach außen vorspringenden Schulter 35 endet, an die sich eine zylindrische Fläche 36 anschließt, die als Lagersitz für die beiden Kegelrollenlager 23 und 24 dient. Auf der von der Schulter 35 abliegenden Seite endet der zylindrische Abschnitt 36 in einem Gewinde, das eine Ringmutter 37 trägt, mit der die Vorspannung der beiden Kegelrollenlager 23 und 24 eingestellt wird. Jenseits der Ringmutter 37 bildet die Eingangswelle 7 einen zylindrischen Zapfen 38, auf dem die Wellenkupplung 9 mit einer Klemm-Muffe 39 sitzt.

Die Klemm-Muffe 39 ist mit einem elastomeren Verbindungsglied 41 mit einer zweiten Klemm-Muffe 42 verbunden, die mit ihrer Bohrung 43 auf die Motorwelle 5 aufgesteckt werden kann. Beide Klemm-Muffen 39 und 42 sind radial und ein Stück weit in Umfangsrichtung geschlitzt, wie dies bei derartigen Klemm-Muffen bekannt ist.

Die Wellenkupplung 9 befindet sich innerhalb des rohrförmigen Teils des Zwischengehäuses 28.

Die Eingangswelle 7 enthält eine koaxial zu der zylindrischen Außenfläche 36 angeordnete Sackbohrung 44, in der ein zylindrischer Zapfen 45 eingeschrumpft ist, der an seinem herausragenden Ende einstückig ein Ritzel 46 trägt, das mit einer Hypoidgleasonverzahnung 47 versehen ist. Die Zähne der Gleasonverzahnung 47 sind lediglich symbolisch angedeutet. Das Ritzel 46 trägt insgesamt fünf Zähne.

Mit dem Ritzel 46 kämmt ein Tellerrad 48, das ebenfalls eine Hypoidgleasonverzahnung 49 trägt. Die Verzahnung 49 erstreckt sich zwischen einem äußeren Durchmesser 51 und einem inneren Durchmesser 52.

Das Tellerrad 48 und das Ritzel 46 bilden zusammen ein einstufiges Hypoidgetriebe mit Gleasonverzahnung.

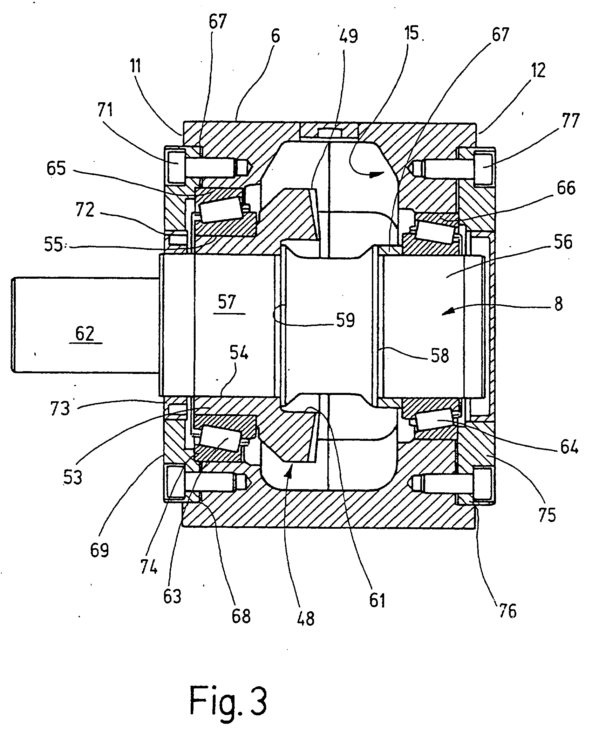

Wie Fig. 3 erkennen lässt, ist das Tellerrad 48 auf seiner von der Verzahnung 49 abliegenden Seite mit einem rohrförmigen Fortsatz 53 versehen, der eine zylindrische Bohrung 54 enthält sowie eine zylindrische Außenfläche 55 aufweist, die zu der Bohrung 54 koaxial ist. Die Bohrung 54 wiederum ist koaxial zu der Verzahnung 49.

Das Tellerrad 48 befindet sich in dem Innenraum 15 des Getriebegehäuses 6 und sitzt mit dem rohrförmigen Fortsatz 53 auf der Ausgangswelle 8. Die Ausgangswelle 8 weist zwei zylindrische Abschnitte 56 und 57 auf, die voneinander beabstandet sind und jeweils an einer Schulter 58 bzw. 59 enden. Die Schulter 59 dient als Anlage für ein stirnseitiges Ende des rohrförmigen Abschnitts 53, und zwar desjenigen Abschnittes, der der Verzahnung 49 benachbart ist. Wie die Figur erkennen lässt, ist die Verzahnung 49 in dem Sinne freigestellt, dass das Tellerrad 48 im Anschluss an die Verzahnung 49 eine Ausdrehung 61 enthält, mit der sie die Schulter 59 übergreift.

An die Sitzfläche 57 schließt sich ein Ausgangswellenzapfen 62 an, über den der eigentliche Abtrieb erfolgt.

Die Lagerung der Ausgangswelle 8 geschieht mit Hilfe von zwei in O-Anordnung montierten Kegelrollenlagern 63 und 64. Das Kegelrollenlager 63 sitzt mit seinem Innenlagerring auf der zylindrischen Außenumfangsfläche 55 des rohrförmigen Fortsatzes 53 und steckt mit seinem Außenlagerring in einer zylindrischen Durchgangsbohrung 65, die von der Montagefläche 11 her in das Gehäuseinnere 15 führt. Koaxial zu der Bohrung 65 enthält das Getriebegehäuse 6 eine weitere zylindrische Bohrung 66, die der Aufnahme des Außenlagerrings des Kegelrollenlagers 64 dient. Der Innenlagerring dieses Kegelrollenlagers 64 sitzt auf dem zylindrischen Abschnitt 56 und stützt sich über einen Distanzring 67 an der Schulter 58 ab.

Die Einstellung des Zahnflankenspiels zwischen dem Tellerrad 48 und dem Ritzel 46 geschieht mit Hilfe von Distanzscheiben 67, die in einer die Bohrung 65 umgebenden Ausdrehung 68 des Getriebegehäuses 6 liegen, d.h. an der Rückseite des Tellerrads 48. In der Ausdrehung 68 ist eine Halteplatte 69 eingesetzt, die mit mehreren Schrauben 71 festgeschraubt ist. Die Halteplatte 69 enthält eine Bohrung 72 mit einer darin sitzenden Lippendichtung 73, die gegen den zylindrischen Abschnitt 54 abdichtet. An einer an der Innenseite der Halteplatte 69 ausgebildeten Schulter 74 liegt der Außenlagerring des Kegelrollenlagers 63 an.

Eine im Aufbau ähnliche Halteplatte 75 befindet sich in einer Ausdrehung 76 der Montagefläche 12. Die Halteplatte 75 wird ebenfalls mittels Schrauben 77 festgehalten und sie drückt mit ihrer Innenseite gegen den Außenlagerring des Kegelrollenlagers 64.

Die Zähnezahl des Tellerrades 48 variiert mit dem gewünschten Untersetzungsverhältnis. Sie beträgt bei einem Untersetzungsverhältnis von 12:1 sechzig Zähne und bei einem Übersetzungsverhältnis von 15:1 fünfundsiebzig Zähne, wobei jeweils das Ritzel fünf Zähne trägt.

In der,nachstehenden Tabelle sind für unterschiedliche Leistungsklassen des Getriebes 3 geeignete Verzahnungsparameter für das Hypoidgetriebe angegeben. Die Verzahnungsparameter sind die Parameter, wie sie im Allgemeinen in Verbindung mit einer Gleasonverzahnung allgemein bekannt definiert sind. Die Werte weichen jedoch von dem üblichen ab.

Mit Hilfe des erfindungsgemäßen Getriebes 3 ist es möglich, eine weitgehend spielfreie Untersetzung zwischen dem Antriebsmotor 2 und der Ausgangswelle 8 zu schaffen, wobei eine verhältnismäßig starke Untersetzung erzielt wird. Das Hypoidgetriebe zeichnet sich durch einen hohen Wirkungsgrad aus, und zwar auch dann, wenn das Antriebssystem 1 im Start-Stopp-Betrieb arbeitet.

Ein Servoantriebssystem für Maschinen weist einen Antriebsmotor auf, der an die Eingangswelle eines Winkelgetriebes angekuppelt ist. Das Winkelgetriebe ist ein einstufiges Getriebe mit einer Hypoidgleasonverzahnung und einem Untersetzungsverhältnis größer als 10,5:1.

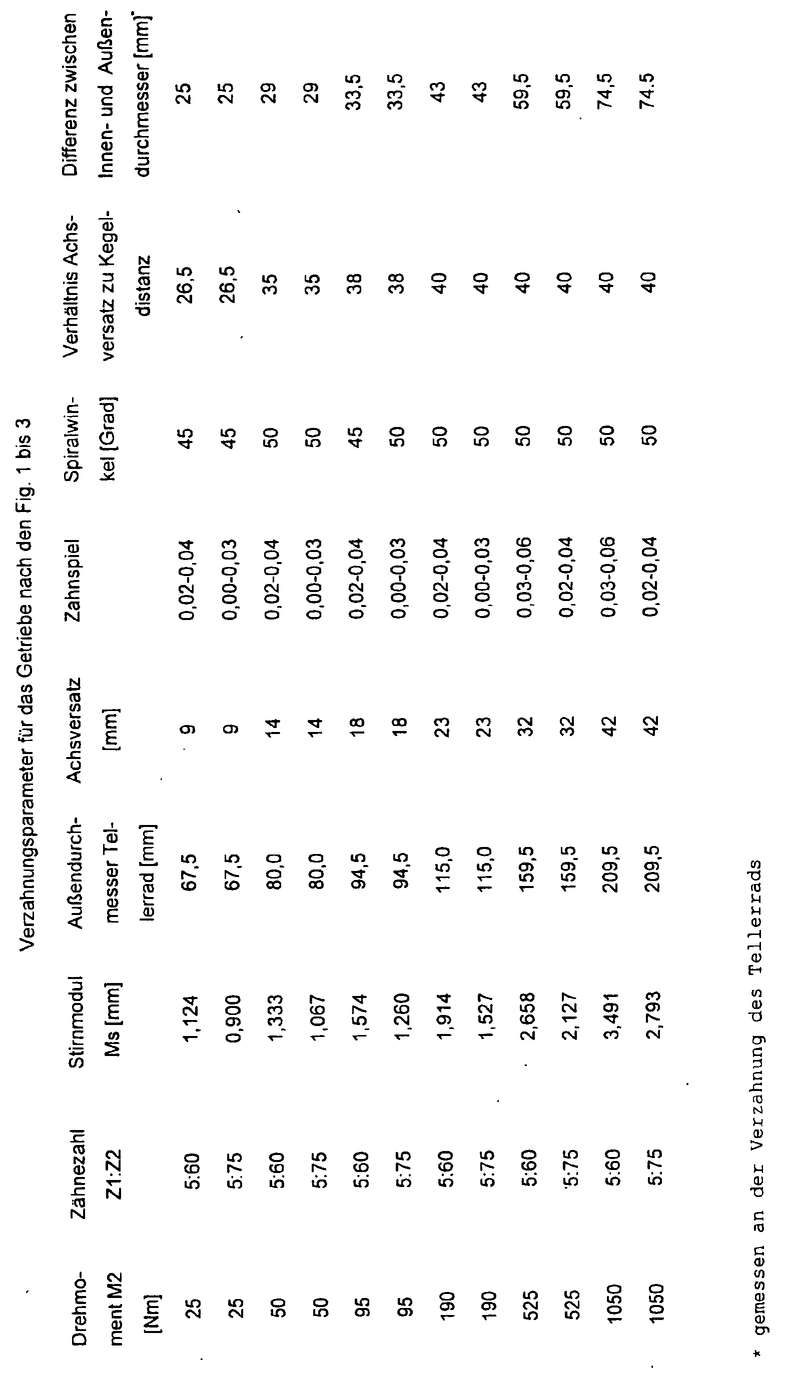

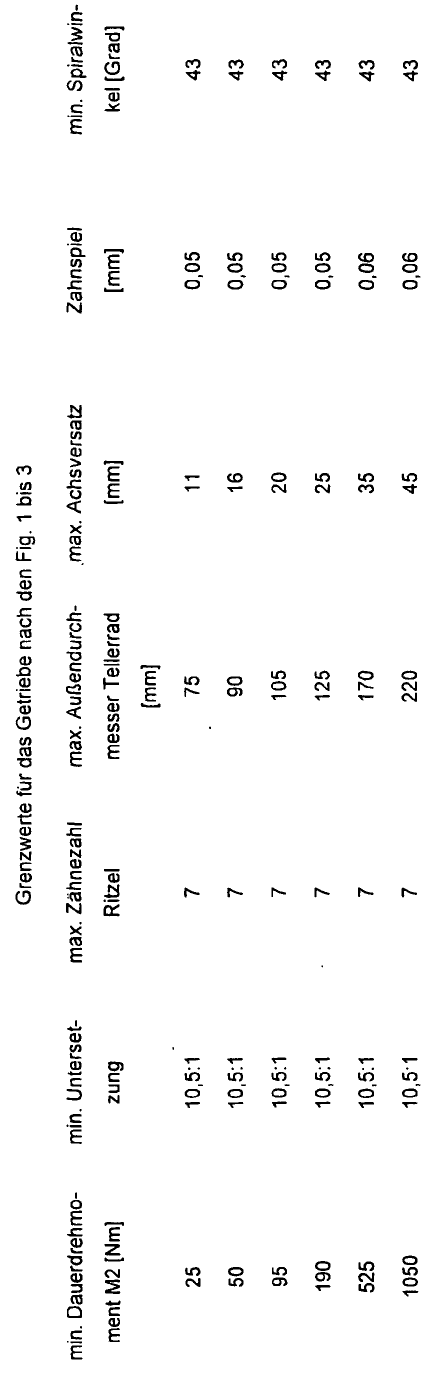

Ein größerer Kerndurchmesser des Ritzels lässt sich erreichen, wenn Spiralwinkel und Verzahnungsparameter gemäß den nachstehenden Tabellen verwendet werden.

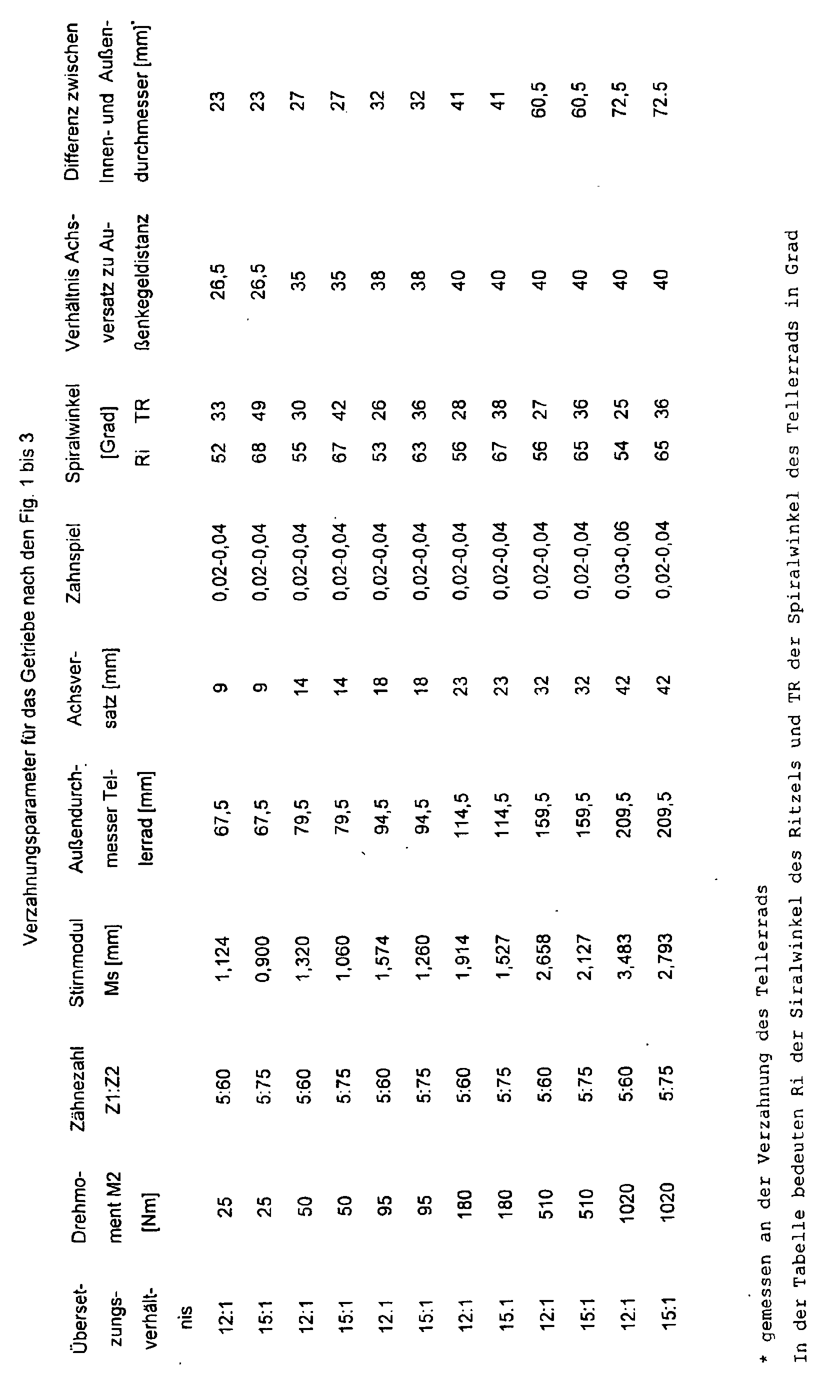

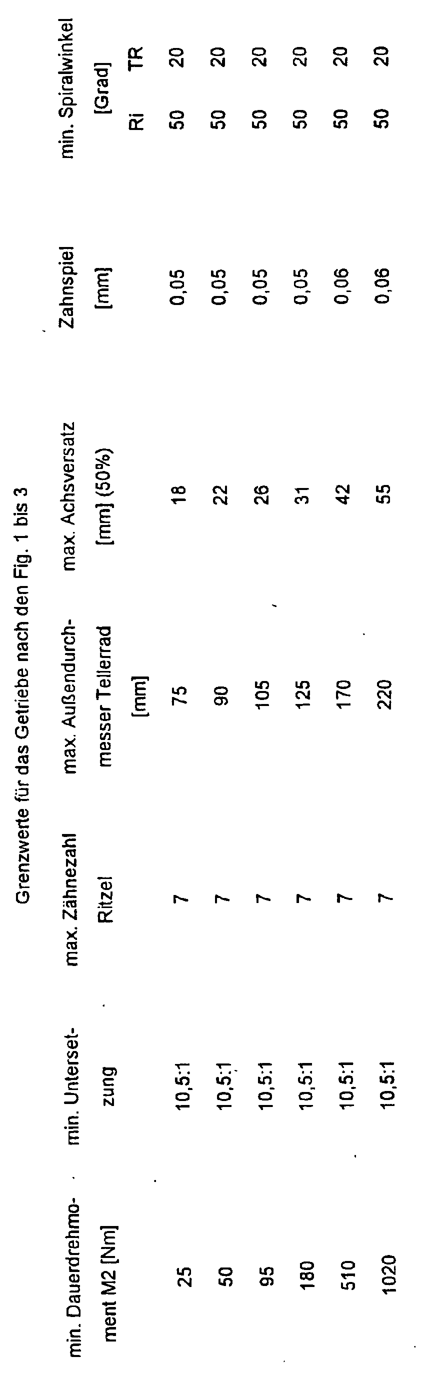

## Patentansprüche

1. Servoantriebssystem (1) für rotatorisch oder linear verstellbare Achsen von Maschinen, insbesondere von Fertigungsmaschinen, Produktionsmaschinen, Werkzeugmaschinen und dergl.,
mit einem Antriebsmotor (2), der eine Ausgangswelle (5) aufweist,
mit einem Getriebegehäuse (6), in dem eine Eingangswelle (7) sowie eine Ausgangswelle (8) drehbar gelagert sind,
mit einem Tellerrad (48), das mit der Ausgangswelle (8) drehfest verbunden ist und eine Gleasonverzahnung trägt,
mit einem Ritzel (46), das mit der Eingangswelle (7) drehfest verbunden ist und eine Gleasonverzahnung trägt, wobei das Tellerrad (48) und das Ritzel (46) ein Hypoidgetriebe bilden, das eine Untersetzung von größer/gleich 10,5:1 aufweist.

2. Servoantriebssystem nach Anspruch 1, **dadurch gekennzeichnet, dass** der Antriebsmotor (2) ein Elektromotor ist.

3. Servoantriebssystem nach Anspruch 1, **dadurch gekennzeichnet, dass** der Antriebsmotor (2) ein Fluidmotor ist.

4. Servoantriebssystem nach Anspruch 3, **dadurch gekennzeichnet, dass** das Fluid Druckluft oder Hydrauliköl ist.

5. Servoantriebssystem nach Anspruch 1, **dadurch gekennzeichnet, dass** die Ausgangswelle (5) des Antriebsmotors (2) unmittelbar mit der Eingangswelle (7) verbunden ist.

6. Servoantriebssystem nach Anspruch 1, **dadurch gekennzeichnet, dass** das Getriebegehäuse (6) zwei zueinander parallele Montageflächen (11,12) aufweist, von denen zumindest die eine rechteckig ist, dass die beiden Montageflächen (11,12) durch eine Seitenwandanordnung (13) miteinander verbunden sind, wobei die Seitenwandanordnung (13) im Bereich der Ecken (14) der betreffenden Montagefläche (11,12) zurückversetzt ist, und dass in diesem Bereich die Montagefläche (11,12) Durchgangsöffnungen (16) enthält.

7. Servoantriebssystem nach Anspruch 1, **dadurch gekennzeichnet, dass** das Getriebegehäuse (6) eine zu der Eingangswelle (7) im Wesentlichen konzentrische Bohrung (18) enthält, in der ein Eingangswellengehäuse (21) steckt, das Lagersitze für zwei gegeneinander vorgespannte Kegelrollenlager (23,24) enthält.

8. Servoantriebssystem nach Anspruch 1, **dadurch gekennzeichnet, dass** die Eingangswelle (7) eine koaxiale Bohrung (44) enthält und dass das Ritzel (46) mit einem einstückigen Zapfen (45) versehen ist, der drehfest in der Bohrung (44) der Eingangswelle (7) sitzt.

9. Servoantriebssystem nach Anspruch 1, **dadurch gekennzeichnet, dass** das Tellerrad (48) mit einem rohrförmigen Fortsatz (53) versehen ist, der auf der der Verzahnung (49) gegenüberliegenden Seite des Tellerrades (48) einstückig angeformt ist, und dass der rohrförmige Fortsatz (53) eine zu der Verzahnung (49) des Tellerrades (48) koaxiale Bohrung (54) enthält, mit der er drehfest und reibschlüssig auf der Ausgangswelle (8) sitzt.

10. Servoantriebssystem nach Anspruch 9, **dadurch gekennzeichnet, dass** der rohrförmige Fortsatz (53) eine zu der Verzahnung (49) des Tellerrades (48) koaxiale Sitzfläche (55) für ein Lager (63) aufweist, mit dem die Ausgangswelle (8) in dem Getriebegehäuse (6) drehbar gelagert ist.

11. Servoantriebssystem nach Anspruch 1, **dadurch gekennzeichnet, dass** das Ritzel (4) wenigstens fünf höchstens sieben Zähne aufweist.

12. Servoantriebssystem nach Anspruch 1, **dadurch gekennzeichnet, dass** für das Übersetzungsverhältnis 1:12 das Ritzel (46) fünf Zähne und das Tellerrad (48) 60 Zähne aufweist.

13. Servoantriebssystem nach Anspruch 1, **dadurch gekennzeichnet, dass** für das Übersetzungsverhältnis 1:15 das Ritzel (46) fünf und das Tellerrad (48) 75 Zähne aufweist.

14. Servoantriebssystem nach Anspruch 1, **dadurch gekennzeichnet, dass** die Verzahnung (47,49) an dem Ritzel (46) und dem Tellerrad (48) für ein Nenndrehmoment an der Ausgangswelle (8) zwischen 20 Nm und 1500 Nm ausgelegt ist.

15. Servoantriebssystem nach Anspruch 1, **dadurch gekennzeichnet, dass** der Achsversatz bei einem Nennmoment der Ausgangswelle (8) von zwischen 20 Nm und 1500 Nm zwischen 9 mm und 45 mm beträgt.

16. Servoantriebssystem nach Anspruch 1, **dadurch gekennzeichnet, dass** der Stirnmodul bei einem Übersetzungsverhältnis über 10,5:1 zwischen 0,7 und 4,0 beträgt.

17. Servoantriebssystem nach Anspruch 1, **dadurch gekennzeichnet, dass** der Spiralwinkel größer gleich 43° beträgt.

18. Servoantriebssystem nach Anspruch 1, **dadurch gekennzeichnet, dass** das Verhältnis Achsversatz zu Kegeldistanz zwischen 26,5 und 40 % beträgt.

19. Servoantriebssystem nach Anspruch 1, **dadurch gekennzeichnet, dass** das Zahnspiel für eine Untersetzung größer 10,5:1 zwischen 0,00 und 0,06 mm beträgt.

20. Getriebe (3) für ein Servoantriebssystem (1) für rotatorisch oder linear verstellbare Achsen von Maschinen, insbesondere von Fertigungsmaschinen, Produktionsmaschinen, Werkzeugmaschinen und dergl.,
mit einem Getriebegehäuse (6), in dem eine Eingangswelle (7) sowie eine Ausgangswelle (8) drehbar gelagert sind,
mit einem Tellerrad (48), das mit der Ausgangswelle (8) drehfest verbunden ist und eine Gleasonverzahnung trägt,
mit einem Ritzel (46), das mit der Eingangswelle (7) drehfest verbunden ist und eine Gleasonverzahnung trägt, wobei das Tellerrad (48) und das Ritzel (46) ein Hypoidgetriebe bilden, das eine Untersetzung von größer/gleich 10,5:1 aufweist.

21. Getriebe nach Anspruch 20, **dadurch gekennzeichnet, dass** die Ausgangswelle (5) eines Antriebsmotors (2) unmittelbar mit der Eingangswelle (7) verbunden ist.

22. Getriebe nach Anspruch 20, **dadurch gekennzeichnet, dass** das Getriebegehäuse (6) zwei zueinander parallele Montageflächen (11,12) aufweist, von denen zumindest die eine rechteckig ist, dass die beiden Montageflächen (11,12) durch eine Seitenwandanordnung (13) miteinander verbunden sind, wobei die Seitenwandanordnung (13) im Bereich der Ecken (14) der betreffenden Montagefläche (11,13) zurückversetzt ist, und dass in diesem Bereich die Montagefläche (11,12) Durchgangsöffnungen (16) enthält.

23. Getriebe nach Anspruch 20, **dadurch gekennzeichnet, dass** das Getriebegehäuse (6) eine zu der Eingangswelle (7) im Wesentlichen konzentrische Bohrung (18) enthält, in der ein Eingangswellengehäuse (21) steckt, das Lagersitze für zwei gegeneinander vorgespannte Kegelrollenlager (23,24) enthält.

24. Getriebe nach Anspruch 20, **dadurch gekennzeichnet, dass** die Eingangswelle (7) eine koaxiale Bohrung (44) enthält und dass das Ritzel (46) mit einem einstückigen Zapfen (45) versehen ist, der drehfest in der Bohrung (44) der Eingangswelle (7) sitzt.

25. Getriebe nach Anspruch 20, **dadurch gekennzeichnet, dass** das Tellerrad (48) mit einem rohrförmigen Fortsatz (53) versehen ist, der auf der der Verzahnung (49) gegenüberliegenden Seite des Tellerrades (48) einstückig angeformt ist, und dass der rohrförmige Fortsatz (53) eine zu der Verzahnung (49) des Tellerrades (48) koaxiale Bohrung (54) enthält, mit der er drehfest und reibschlüssig auf der Ausgangswelle (8) sitzt.

26. Getriebe nach Anspruch 25, **dadurch gekennzeichnet, dass** der rohrförmige Fortsatz (53) eine zu der Verzahnung (49) des Tellerrades (48) koaxiale Sitzfläche (55) für ein Lager (63) aufweist, mit dem die Ausgangswelle (8) in dem Getriebegehäuse (6) drehbar gelagert ist.

27. Getriebe nach Anspruch 20, **dadurch gekennzeichnet, dass** das Ritzel (46) wenigstens fünf höchstens sieben Zähne aufweist.

28. Getriebe nach Anspruch 20, **dadurch gekennzeichnet, dass** für das Übersetzungsverhältnis 1:12 das Ritzel (46) fünf Zähne und das Tellerrad (48) 60 Zähne aufweist.

29. Getriebe nach Anspruch 20, **dadurch gekennzeichnet, dass** für das Übersetzungsverhältnis 1:15 das Ritzel (46) fünf und das Tellerrad (48) 75 Zähne aufweist.

30. Getriebe nach Anspruch 20, **dadurch gekennzeichnet, dass** die Verzahnung (47,49) an dem Ritzel (46) und dem Tellerrad (48) für ein Nenndrehmoment an der Ausgangswelle (8) zwischen 20 Nm und 1500 Nm ausgelegt ist.

31. Getriebe nach Anspruch 20, **dadurch gekennzeichnet, dass** der Achsversatz bei einem Nennmoment der Ausgangswelle (8) von zwischen 20 Nm und 1500 Nm zwischen 9 mm und 45 mm beträgt.

32. Getriebe nach Anspruch 20, **dadurch gekennzeichnet, dass** der Stirnmodul bei einem Übersetzungsverhältnis über 10,5:1 zwischen 0,7 und 4,0 beträgt.

33. Getriebe nach Anspruch 20, **dadurch gekennzeichnet, dass** der Spiralwinkel größer gleich 43° beträgt.

34. Getriebe nach Anspruch 20, **dadurch gekennzeichnet, dass** das Verhältnis Achsversatz zu Kegeldistanz zwischen 26,5 und 40 % beträgt.

35. Getriebe nach Anspruch 20, **dadurch gekennzeichnet, dass** das Zahnspiel für eine Untersetzung größer 10,5:1 zwischen 0,00 und 0,06 mm beträgt.

## Claims

1. Servo drive system (1) for rotationally or linearly adjustable axles of machines, in particular manufacturing machines, production machines, machine tools and the like,
with a drive motor (2), which has an output shaft (5),
with a gearbox (6), in which an input shaft (7) as well as an output shaft (8) are rotatably disposed,
with a crown wheel (48), which is connected to the output shaft (8) to be fixed against rotation and bears a Gleason type gear tooth arrangement,
with a pinion (46), which is connected to the input shaft (7) to be fixed against rotation and bears a Gleason type gear tooth arrangement, wherein the crown wheel (48) and the pinion (46) form a hypoid gear, which has a reduction ratio of greater than/equal to 10.5 : 1.

2. Servo drive system according to Claim 1, **characterised in that** the drive motor (2) is an electric motor.

3. Servo drive system according to Claim 1, **characterised in that** the drive motor (2) is a fluid motor.

4. Servo drive system according to Claim 3, **characterised in that** the fluid is compressed air or hydraulic oil.

5. Servo drive system according to Claim 1, **characterised in that** the output shaft (5) of the drive motor (2) is connected directly to the input shaft (7).

6. Servo drive system according to Claim 1, **characterised in that** the gearbox (6) has two parallel mounting faces (11, 12), of which at least one is rectangular, that the two mounting faces (11, 12) are connected to one another through a side wall arrangement (13), wherein the side wall arrangement (13) is set back in the region of the corners (14) of the respective mounting face (11, 12), and that in this region the mounting face (11, 12) contains passages (16).

7. Servo drive system according to Claim 1, **characterised in that** the gearbox (6) contains a hole (18), which is essentially concentric to the input shaft (7) and in which an input shaft housing (21) sits, which contains bearing seats for two taper roller bearings (23, 24) biased relative to one another.

8. Servo drive system according to Claim 1, **characterised in that** the input shaft (7) contains a coaxial hole (44) and that the pinion (46) is provided with a journal (45) in one piece, which sits in the hole (44) of the input shaft (7) to be fixed against rotation.

9. Servo drive system according to Claim 1, **characterised in that** the crown wheel (48) is provided with a tubular extension (53), which is moulded in one piece on the side of the crown wheel (48) opposite the tooth arrangement (49), and that the tubular extension (53) contains a hole (54), which is coaxial to the tooth arrangement (49) of the crown wheel (48) and with which it sits on the output shaft (8) to be fixed against rotation and frictionally engaged.

10. Servo drive system according to Claim 9, **characterised in that** coaxial to the tooth arrangement (49) of the crown wheel (48) the tubular extension (53) has a seating (55) for a bearing (63), with which the output shaft (8) is rotatably disposed in the gearbox (6).

11. Servo drive system according to Claim 1, **characterised in that** the pinion (4) has at least five and at most seven teeth.

12. Servo drive system according to Claim 1, **characterised in that** for the gear ratio 1 : 12 the pinion (46) has five teeth and the crown wheel (48) has 60 teeth.

13. Servo drive system according to Claim 1, **characterised in that that** for the gear ratio 1 : 15 the pinion (46) has five teeth and the crown wheel (48) has 75 teeth.

14. Servo drive system according to Claim 1, **characterised in that** the tooth arrangement (47, 49) on the pinion (46) and the crown wheel (48) is designed for a rated torque at the output shaft (8) of between 20 Nm and 1500 Nm.

15. Servo drive system according to Claim 1, **characterised in that** the offset with a rated torque of the output shaft (8) of between 20 Nm and 1500 Nm amounts to between 9 mm and 45 mm.

16. Servo drive system according to Claim 1, **characterised in that** with a gear ratio greater than 10.5 : 1 the transverse module amounts to between 0.7 and 4.0.

17. Servo drive system according to Claim 1, **characterised in that** the spiral angle is greater than/equal to 43°.

18. Servo drive system according to Claim 1, **characterised in that** the ratio of offset to cone distance amounts to between 26.5 and 40%.

19. Servo drive system according to Claim 1, **characterised in that** the tooth clearance for a reduction ratio greater than 10.5 : 1 amounts to between 0.00 and 0.06 mm.

20. Gear transmission (3) for a servo drive system (1) for rotationally or linearly adjustable axles of machines, in particular manufacturing machines, production machines, machine tools and the like,
with a gearbox (6), in which an input shaft (7) as well as an output shaft (8) are rotatably disposed,
with a crown wheel (48), which is connected to the output shaft (8) to be fixed against rotation and bears a Gleason type gear tooth arrangement,
with a pinion (46), which is connected to the input shaft (7) to be fixed against rotation and bears a Gleason type gear tooth arrangement, wherein the crown wheel (48) and the pinion (46) form a hypoid gear, which has a reduction ratio of greater than/equal to 10.5 : 1.

21. Gear transmission according to Claim 20, **characterised in that** the output shaft (5) of a drive motor (2) is connected directly to the input shaft (7).

22. Gear transmission according to Claim 20, **characterised in that** the gearbox (6) has two parallel mounting faces (11, 12), of which at least one is rectangular, that the two mounting faces (11, 12) are connected to one another through a side wall arrangement (13), wherein the side wall arrangement (13) is set back in the region of the corners (14) of the respective mounting face (11, 12), and that in this region the mounting face (11, 12) contains passages (16).

23. Gear transmission according to Claim 20, **characterised in that** the gearbox (6) contains a hole (18), which is essentially concentric to the input shaft (7) and in which an input shaft housing (21) sits, which contains bearing seats for two taper roller bearings (23, 24) biased relative to one another.

24. Gear transmission according to Claim 20, **characterised in that** the input shaft (7) contains a coaxial hole (44) and that the pinion (46) is provided with a journal (45) in one piece, which sits in the hole (44) of the input shaft (7) to be fixed against rotation.

25. Gear transmission according to Claim 20, **characterised in that** the crown wheel (48) is provided with a tubular extension (53), which is moulded in one piece on the side of the crown wheel (48) opposite the tooth arrangement (49), and that the tubular extension (53) contains a hole (54), which is coaxial to the tooth arrangement (49) of the crown wheel (48) and with which it sits on the output shaft (8) to be fixed against rotation and frictionally engaged.

26. Gear transmission according to Claim 25, **characterised in that** coaxial to the tooth arrangement (49) of the crown wheel (48) the tubular extension (53) has a seating (55) for a bearing (63), with which the output shaft (8) is rotatably disposed in the gearbox (6).

27. Gear transmission according to Claim 20, **characterised in that** the pinion (4) has at least five and at most seven teeth.

28. Gear transmission according to Claim 20, **characterised in that** for the gear ratio 1 : 12 the pinion (46) has five teeth and the crown wheel (48) has 60 teeth.

29. Gear transmission according to Claim 20, **characterised in that** that for the gear ratio 1 : 15 the pinion (46) has five teeth and the crown wheel (48) has 75 teeth.

30. Gear transmission according to Claim 20, **characterised in that** the tooth arrangement (47, 49) on the pinion (46) and the crown wheel (48) is designed for a rated torque at the output shaft (8) of between 20 Nm and 1500 Nm.

31. Gear transmission according to Claim 20, **characterised in that** the offset with a rated torque of the output shaft (8) of between 20 Nm and 1500 Nm amounts to between 9 mm and 45 mm.

32. Gear transmission according to Claim 20, **characterised in that** with a gear ratio greater than 10.5 : 1 the transverse module amounts to between 0.7 and 4.0.

33. Gear transmission according to Claim 20, **characterised in that** the spiral angle is greater than/equal to 43°.

34. Gear transmission according to Claim 20, **characterised in that** the ratio of offset to cone distance amounts to between 26.5 and 40%.

35. Gear transmission according to Claim 20, **characterised in that** the tooth clearance for a reduction ratio greater than 10.5 : 1 amounts to between 0.00 and 0.06 mm.

## Revendications

1. Système de servocommande (1) pour des axes de machines pouvant tourner ou se déplacer linéairement, en particulier de machines de fabrication, de machines de production, de machines-outils et similaires, comprenant
- un moteur d'entraînement (2), qui présente un arbre de sortie (5),
- un boîtier d'engrenage (6) dans lequel sont montés en rotation un arbre d'entrée (7) et un arbre de sortie (8),
- une couronne dentée (48) solidaire en rotation de l'arbre de sortie (8) et portant une denture Gleason,
- un pignon (46) qui est solidaire en rotation de l'arbre d'entrée (7) et porte une denture Gleason, la couronne dentée (48) et le pignon (46) formant un engrenage hypoïde avec une démultiplication au moins égale à 10,5 : 1.

2. Système de servocommande selon la revendication 1, **caractérisé en ce que** le moteur d'entraînement (2) est un moteur électrique.

3. Système de servocommande selon la revendication 1, **caractérisé en ce que** le moteur d'entraînement (2) est un moteur à fluide.

4. Système de servocommande selon la revendication 3, **caractérisé en ce que** le fluide est de l'air comprimé ou une huile hydraulique.

5. Système de servocommande selon la revendication 1, **caractérisé en ce que** l'arbre de sortie (5) du moteur d'entraînement (2) est relié directement à l'arbre d'entrée (7).

6. Système de servocommande selon la revendication 1, **caractérisé en ce que** le boîtier d'engrenage (6) présente deux faces de montage (11, 12) parallèles dont une au moins est rectangulaire, ces deux faces (11, 12) étant reliées par un système de parois latérales (13) qui, dans la zone des coins (14) des faces de montage (11, 12) correspondantes, est décalé en arrière avec dans cette zone, des ouvertures de passage (16) traversant la face de montage (11, 12) correspondante.

7. Système de servocommande selon la revendication 1, **caractérisé en ce que** le boîtier d'engrenage (6) présente un alésage (18) essentiellement concentrique à l'arbre d'entrée (7) et dans lequel est enfoncé un boîtier d'arbre d'entrée (21) qui contient des sièges d'accueil pour deux paliers à rouleaux coniques (22, 23) en précontrainte l'un par rapport à l'autre.

8. Système de servocommande selon la revendication 1, **caractérisé en ce que** l'arbre d'entrée (7) est percé d'un alésage coaxial (44) et le pignon (46) comporte un pivot (45) monobloc qui est monté dans l'alésage (44) de l'arbre d'entrée (7) avec solidarité en rotation.

9. Système de servocommande selon la revendication 1, **caractérisé en ce que** la couronne dentée (48) se prolonge par un appendice (53) de forme tubulaire réalisé monobloc sur la face de la couronne dentée (48) située à l'opposé de la denture (49), cet appendice (53) étant percé d'un alésage (54) coaxial à la denture (49) de la couronne dentée (48) et par lequel il est monté avec solidarité en rotation et verrouillage par friction sur l'arbre de sortie (8).

10. Système de servocommande selon la revendication 9, **caractérisé en ce que** l'appendice (53) de forme tubulaire présente une surface d'assise (55) qui est coaxiale à la denture (49) de la couronne dentée (58) et qui est destinée à accueillir un palier (63) par lequel l'arbre de sortie (8) est monté en rotation dans le boîtier d'engrenage (6).

11. Système de servocommande selon la revendication 1, **caractérisé en ce que** le pignon (4) présente au moins cinq et au plus sept dents.

12. Système de servocommande selon la revendication 1, **caractérisé en ce que** pour le rapport de multiplication 1 : 12, le pignon (46) présente cinq dents et la couronne dentée (48) soixante dents.

13. Système de servocommande selon la revendication 1, **caractérisé en ce que** pour le rapport de multiplication 1 : 15, le pignon (46) présente cinq dents et la couronne dentée (48) soixante quinze dents.

14. Système de servocommande selon la revendication 1, **caractérisé en ce que** les dentures (47, 49) sur le pignon (46) et sur la couronne dentée (48) respectivement sont conçues pour un couple nominal sur l'arbre de sortie (8) compris entre 20 Nm et 1 500 Nm.

15. Système de servocommande selon la revendication 1, **caractérisé en ce que** pour un couple nominal de l'arbre de sortie (8) compris entre 20 Nm et 1 500 Nm, le décalage axial est compris entre 9 mm et 45 mm.

16. Système de servocommande selon la revendication 1, **caractérisé en ce que** pour un rapport de multiplication dépassant 10,5 : 1, le module du pas oblique est compris entre 0,7 et 4,0.

17. Système de servocommande selon la revendication 1, **caractérisé en ce que** l'angle de la spirale est au moins égal à 43°.

18. Système de servocommande selon la revendication 1, **caractérisé en ce que** le rapport du décalage axial à la distance des cônes est compris entre 26,5 et 40 %.

19. Système de servocommande selon la revendication 1, **caractérisé en ce que** le jeu de denture pour une démultiplication dépassant 10,5 : 1, est compris entre 0,00 et 0, 06 mm.

20. Engrenage (3) pour un système de servocommande (1) destiné à des axes de machines pouvant tourner ou se déplacer linéairement, en particulier de machines de fabrication, de machines de production, de machines-outils et similaires, comprenant :
- un boîtier d'engrenage (6) dans lequel sont montés en rotation un arbre d'entrée (7) et un arbre de sortie (8),
- une couronne dentée (48) solidaire en rotation de l'arbre de sortie (8) et portant une denture Gleason,
- un pignon (46) qui est solidaire en rotation de l'arbre d'entrée (7) et porte une denture Gleason, la couronne dentée (48) et le pignon (46) formant un engrenage hypoïde avec une démultiplication au moins égale à 10,5 : 1.

21. Engrenage selon la revendication 20, **caractérisé en ce que** l'arbre de sortie (5) d'un moteur d'entraînement (2) est relié directement à l'arbre d'entrée (7).

22. Engrenage selon la revendication 20, **caractérisé en ce que** le boîtier d'engrenage (6) présente deux faces de montage (11, 12) parallèles dont une au moins est rectangulaire, ces deux faces (11, 12) étant reliées par un système de parois latérales (13) qui, dans la zone des coins (14) des faces de montage (11, 12) correspondantes, est décalé en arrière avec dans cette zone, des ouvertures de passage (16) traversant la face de montage (11, 12) correspondante.

23. Engrenage selon la revendication 20, **caractérisé en ce que** le boîtier d'engrenage (6) présente un alésage (18) essentiellement concentrique à l'arbre d'entrée (7) et dans lequel est enfoncé un boîtier d'arbre d'entrée (21) qui contient des sièges d'accueil pour deux paliers à rouleaux coniques (22, 23) en précontrainte l'un par rapport à l'autre.

24. Engrenage selon la revendication 20, **caractérisé en ce que** l'arbre d'entrée (7) est percé d'un alésage coaxial (44) et le pignon (46) comporte un pivot (45) monobloc qui est monté dans l'alésage (44) de l'arbre d'entrée (7) avec solidarité en rotation.

25. Engrenage selon la revendication 20, **caractérisé en ce que** la couronne dentée (48) se prolonge par un appendice (53) de forme tubulaire réalisé monobloc sur la face de la couronne dentée (48) située à l'opposé de la denture (49), cet appendice (53) étant percé d'un alésage (54) coaxial à la denture (49) de la couronne dentée (48) et par lequel il est monté avec solidarité en rotation et verrouillage par friction sur l'arbre de sortie (8).

26. Engrenage selon la revendication 20, **caractérisé en ce que** l'appendice (53) de forme tubulaire présente une surface d'assise (55) qui est coaxiale à la denture (49) de la couronne dentée (58) et qui est destinée à accueillir un palier (63) par lequel l'arbre de sortie (8) est monté en rotation dans le boîtier d'engrenage (6).

27. Engrenage selon la revendication 20, **caractérisé en ce que** le pignon (4) présente au moins cinq et au plus sept dents.

28. Engrenage selon la revendication 20, **caractérisé en ce que** pour le rapport de multiplication 1 : 12, le pignon (46) présente cinq dents et la couronne dentée (48) soixante dents.

29. Engrenage selon la revendication 20, **caractérisé en ce que** pour le rapport de multiplication 1 : 15, le pignon (46) présente cinq dents et la couronne dentée (48) soixante quinze dents.

30. Engrenage selon la revendication 20, **caractérisé en ce que** les dentures (47, 49) sur le pignon (46) et sur la couronne dentée (48) respectivement sont conçues pour un couple nominal sur l'arbre de sortie (8) compris entre 20 Nm et 1 500 Nm.

31. Engrenage selon la revendication 20, **caractérisé en ce que** pour un couple nominal de l'arbre de sortie (8) compris entre 20 Nm et 1 500 Nm, le décalage axial est compris entre 9 mm et 45 mm.

32. Engrenage selon la revendication 20, **caractérisé en ce que** pour un rapport de multiplication dépassant 10,5 : 1, le module du pas oblique est compris entre 0,7 et 4,0.

33. Engrenage selon la revendication 20, **caractérisé en ce que** l'angle de la spirale est au moins égal à 43°.

34. Engrenage selon la revendication 20, **caractérisé en ce que** le rapport du décalage axial à la distance des cônes est compris entre 26,5 et 40 %.

35. Engrenage selon la revendication 20, **caractérisé en ce que** le jeu de denture pour une démultiplication dépassant 10,5 : 1, est compris entre 0,00 et 0, 06 mm.
